# EUROPÄISCHE PATENTSCHRIFT

(11) **EP 0 977 062 B1**
(45) Veröffentlichungstag und Bekanntmachung des Hinweises auf die Patenterteilung: **03.07.2002**
(21) Anmeldenummer: 99810547.2
(22) Anmeldetag: 21.06.1999
(51) Int. Cl.: G02B 6/38

(54) **Steckverbindung für Lichtwellenleiter**
Plug connection for light guides
Prise de connexion pour des guides d'ondes lumineuses

(30) Priorität: 27.07.1998 CH 158398
(43) Veröffentlichungstag der Anmeldung: 02.02.2000
(60) Teilanmeldung: 01201654.9
(73) Patentinhaber: HUBER & SUHNER AG, 9100 Herisau (CH)
(72) Erfinder: Züllig, Marc-Andrew, 9100 Herisau (CH)
(74) Vertreter: Isler & Pedrazzini AG

(56) Entgegenhaltungen:
- EP-A- 0 374 136
- EP-A- 0 697 607
- EP-A- 0 893 716
- EP-B- 0 570 652
- US-A- 5 708 745
- PATENT ABSTRACTS OF JAPAN vol. 015, no. 119 (P-1183), 22. März 1991 (1991-03-22) & JP 03 009308 A (FUJITSU LTD), 17. Januar 1991 (1991-01-17)
- PATENT ABSTRACTS OF JAPAN vol. 012, no. 368 (P-766), 4. Oktober 1988 (1988-10-04) & JP 63 118707 A (HITACHI LTD), 23. Mai 1988 (1988-05-23)
- "FIBER OPTIC CONNECTOR WITH BUILT-IN SHUTTER" RESEARCH DISCLOSURE,GB,INDUSTRIAL OPPORTUNITIES LTD. HAVANT, Nr. 275, 1. März 1987 (1987-03-01), Seite 124 XP000645314 ISSN: 0374-4353

## Beschreibung

### TECHNISCHES GEBIET

Die vorliegende Erfindung bezieht sich auf das Gebiet Lichtleitertechnik. Sie betrifft eine Steckverbindung für Lichtwellenleiter gemäss dem Oberbegriff des Anspruchs 1.

Eine solche Steckverbindung ist z.B. aus den Druckschriften EP-B1-0 570 652, EP-B1-0 599 784 oder EP-A1-0 823 649 bekannt. Dieser Stand der Technik wird im folgenden Abschnitt näher beschrieben, dabei werden einige Bezugszeichen, die im Ausführungsbeispiel nur aufgelistet sind, näher erläutert.

### STAND DER TECHNIK

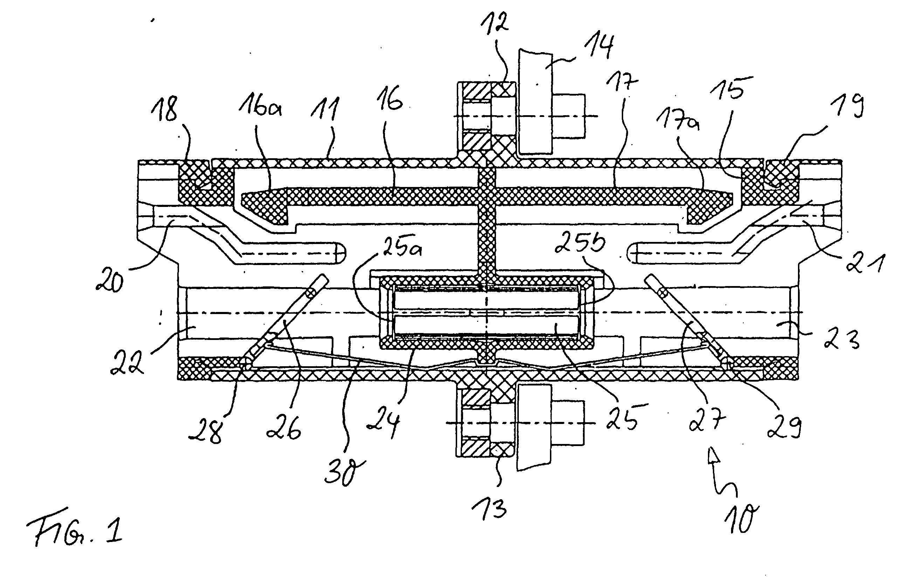

Aus den eingangs genannten Druckschriften ist ein Steckverbindungssystem für Lichtwellenleiter bekannt, bei dem zwei Lichtleiter, die mit ihren Enden jeweils in einem Steckerteil untergebracht und fixiert sind, durch Einstecken der beiden Steckerteile in ein Buchsenteil miteinander lösbar optisch verbunden werden können. Das Buchsenteil dieser bekannten Steckverbindung ist im Längsschnitt in Fig. 1 wiedergegeben.

Das Buchsenteil 10 gemäss Fig. 1 besteht aus einem länglichen im Querschnitt rechteckigen, auf zwei gegenüberliegenden Seiten offenen, äusseren Buchsengehäuse 11, in welches ein inneres Buchsengehäuse 15 einrastend eingeschoben ist. Das innere Buchsengehäuse 15 ragt auf den beiden Seiten teilweise aus dem äusseren Buchengehäuse 11 heraus. Auf die herausragenden Teile des inneren Buchsengehäuses 15 ist auf den beiden Seiten jeweils ein Rahmen 18, 19 aufgeschnappt, der an das äussere Buchsengehäuse 11 anschliesst. Am äusseren Buchsengehäuse 11 sind auf der Ober- und Unterseite jeweils Flansche 12, 13 angeformt, mittels derer das Buchsenteil 10 in der dafür vorgesehenen Oeffnung einer Gehäusewand 14 befestigt werden kann.

Am inneren Buchsengehäuse 15 sind auf der Oberseite von der Mitte zu den beiden Seiten ausgehend zwei federnde Zungen 16 und 17 ausgeformt, die an ihren freien Enden jeweils in eine nach innen in das Gehäuse hineinragende Sperrklinke 16a bzw. 17a übergehen. Wie in Fig. 10 der EP-B1-0 570 652 dargestellt, rasten die Sperrklinken 16a, 17a nach dem Einstecken eines Steckerteils durch Hintergreifen einer am Steckerteil quer angeordneten Sperrleiste ein und halten das Steckerteil in der eingesteckten Position. Zum Lösen der Verrastung ist am Stekkerteil ein Entriegelungshebel angebracht, mit welchem die Zungen 16 bzw. 17 angehoben und die Sperrklinken 16a, 17a entriegelt werden können, wie dies in der zugehörigen Beschreibung der EP-B1-0 570 652 erläutert ist.

In der Mitte des Buchsenteils 10 bzw. in der Mitte des inneren Buchsengehäuses 15 ist die eigentliche Buchse 25 angeordnet. Die Buchse 25 hat die Form eines Zylindermantels, in welchen von beiden Seiten durch entsprechende Einstecköffnungen 25a,b die Steckerstifte der zu verbindenden Steckerteile eingesteckt werden. Die Buchse 25, die im Unterschied zu den aus Kunststoff hergestellten Gehäuseteilen 11, 15 üblicherweise aus Keramik ist, ist in einer Buchsenhalterung 24 (aus Kunststoff) gelagert, die von der Unterseite her in das innere Buchsengehäuse 15 einsetzbar ist. Damit die Steckerstifte sicher in die Einstecköffnungen 25a,b eingeführt werden können, sind an den Seitenwänden des inneren Buchsengehäuses 15 erste Führungsnuten 22, 23 vorgesehen, in welchen die Steckerteile mittels angeformter Seitenleisten (44 in Fig. 8 der EP-B1-0 570 652) geführt werden.

Eine Steckverbindung der beschriebenen Art erfordert verschiedenartige Schutzvorrichtungen. Zum einen soll aus Sicherheitsgründen möglichst vermieden werden, dass Laserlicht aus den zu verbindenden Lichtwellenleitern nach aussen gelangen und das Auge eines Betrachters schädigen kann. Zum anderen ist eine sichere optische Verbindung zwischen den Enden der beiden zu verbindenden Lichtwellenleiter nur dann gegeben, wenn Verschmutzungen im Bereich der Verbindungsstelle, insbesondere durch Staub, auf ein Minimum reduziert werden.

Aus der US-A-4,673,242 ist es bekannt, bei einem Steckerteil eine beim Einstecken federnd zurückschiebbare Abdeckung des Leiterendes vorzusehen, um das Steckerteil vor Verschmutzung zu schützen und den Lichtstrahl am Austreten zu hindern. Das zugehörige Buchsenteil ist dagegen ungeschützt. In der US-A-4,640,575 ist weiterhin eine Abdeckvorrichtung für eine Anschlussbuchse beschrieben, die mittels einer mit einem elastischen Gedächtnis ausgestatteten Lasche an der Gehäusewand befestigt ist und in einer ersten Stellung den Lichtstrahl blockiert und in einer zweiten, Kraftanwendung erreichbaren Stellung die Buchse von aussen staubdicht abschliesst. Eine solch Schutzvorrichtung ist jedoch durch die spezielle Materialauswahl nicht nur aufwendig und teuer in der Herstellung, sondern beansprucht vor allem sehr viel Platz, so dass sie praktisch nicht in das eigentliche Buchsenteil integriert werden kann. Eine weitere, integrierte Schutzvorrichtung ist aus der US-A-4,767,179 bekannt. In diesem Fall wird die Zunge eines dünnen Metallbleches, welche bei gelöster Steckverbindung die Einstecköffnung einer Buchse abschliesst, durch das Steckerteil beim Einstecken elastisch nach innen umgebogen. Die dabei auftretenden Kräfte können allerdings nur dadurch aufgefangen werden, dass die Basisfläche des Metallbleches zwischen dem Buchsengehäuse und einer darunterliegenden gedruckten Schaltungsplatte fest verankert ist. Für ein frei herausstehendes Buchsenteil gemäss Fig. 1 ist eine solche Vorrichtung daher nicht geeignet.

Bei den Steckverbindungen aus den eingangs genannten Druckschriften EP-B1-0 570 652, EP-B1-0 599 784 und EP-A1-0 823 649 sind bei den Steckerteilen zum Schutz der empfindlichen Lichtwellenleiterenden schwenkbare Klappen vorgesehen, die beim Einstecken in ein Buchsenteil 10 gemäss Fig. 1 mit angeformten Steuernocken in zweite Führungsnuten 20, 21 in den Seitenwänden des inneren Buchsengehäuses 15 eingreifen und durch den speziellen Verlauf der zweiten Führungsnuten 20, 21 zum Aufklappen gebracht werden (siehe dazu Fig. 10 der EP-B1-0 570 652. Beim Buchsenteil 10 ist dagegen im zitierten Stand der Technik ein integrierter Staubschutz nicht vorgesehen. Innerhalb des inneren Buchsengehäuses 15 ist lediglich eine Schutzvorrichtung gegen das Austreten von Lichtstrahlen vorhanden, die zwei Strahlenschutzklappen 26 und 27 umfasst (Fig. 1). die beiden Schutzklappen sind durch angeformten Gelenknocken 28, 29 im Boden des inneren Buchsengehäuses 15 schwenkbar gelagert und werden durch eine gemeinsame, in das Gehäuse eingelegte, zweiarmige Blattfeder 30 solange in der in Fig. 1 gezeigten Stellung gehalten, bis sie durch ein eingestecktes Steckerteil gegen die Federkraft auf den Boden gedrückt werden und den Zugang zu den Einstecköffnungen 25a,b der Buchse 25 freigeben.

Wie man aus der Darstellung der Fig. 1 unschwer erkennen kann, blockieren die Strahlenschutzklappen 26, 27, die deutlich kleiner Abmessungen haben, als die Einstecköffnungen des inneren Buchsengehäuses 15, lediglich den in der Mittelachse der Buchse 25 liegenden Strahlengang. Staub und Schmutz können dagegen nahezu ungehindert von aussen an den Strahlenschutzklappen 26, 27 vorbei in das Innere des inneren Buchsengehäuses 15 und damit auch in das Innere der Buchse 25 gelangen und sich dort zwischen die Steckerstifte zweier eingesteckter Steckerteile setzen und so die optische Verbindung beeinträchtigen oder ganz unterbrechen.

Weiterhin ist in der EP-A2-0 374 136 ein faseroptischer Steckverbinder beschrieben (Fig. 26), bei dem das äussere Gehäuse, in dem die eigentliche Führungsbuchse untergebracht ist, beidseitig durch nach innen aufschwenkbare Klappen verschlossen werden kann.

Eine ähnlich wirkende, allerdings nach aussen aufschwenkbare Schutzklappe ist am äusseren Gehäuse des in der EP-A1-0 697 607 gezeigten Steckverbinders angelenkt.

Es ist aber auch bekannt, anstelle einer einseitig angelenkten schwenkbaren Klappe zwei in der Mitte aneinanderstossende Flügel vorzusehen, um das äussere Gehäuse eines optischen Steckverbinders nach aussen hin zu verschliessen (JP-A-3009308).

### DARSTELLUNG DER ERFINDUNG

Es ist Aufgabe der Erfindung, eine Steckverbindung zu schaffen, bei der das Buchsenteil durch eine integrierte Schutzvorrichtung gegen Verschmutzung von aussen geschützt ist, die einfach und funktionssicher ist und nur wenig Platz beansprucht, so dass sie in bereits vorhanden genormte Steckverbindungen ohne Aenderung der Abmessungen integriert werden kann.

Die Aufgabe wird durch die Gesamtheit der Merkmale aus dem Anspruch 1 gelöst.

Der Kern der Erfindung besteht darin, dass Mittel zum staubdichten Abschliessen vorgesehen sind, welche die Einstecköffnung der Buchse selbst verschliessen, wobei die Mittel zum staubdichten Abschliessen vorzugsweise ein Klappenteil umfassen, welches in der zweiten Schwenkstellung die Einstecköffnung der Buchse abdeckt und durch Schwenkmittel entlang einer Führungsschulter in die erste Schwenkstellung verschwenkbar ist, in welcher das Klappenteil seitlich an und parallel zu der Buchse liegt.

Wenn bei einem Buchsenteil - wie in Fig. 1 gezeigt - innerhalb des Buchsenteils bereits eine beim Einstecken eines Steckerteils federnd versenkbare Strahlenschutzklappe angeordnet ist, kann diese Strahlenschutzklappe bevorzugt als Schwenkmittel für die Verschwenkung des Klappenteils verwendet werden, wobei das Klappenteil über ein Befestigungsteil an der Strahlenschutzklappe verschwenkbar angelenkt ist. Die Betätigung der Strahlenschutzklappe durch das einzusteckende Steckerteil kann so auf einfache Weise zur Betätigung des staubdicht abschliessenden Klappenteils verwendet werden.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: im Längsschnitt ein Buchsenteil einer aus dem Stand der Technik bekannten Steckverbindung mit integrierten Strahlenschutzklappen;
- Fig. 2: im Längsschnitt die eine Seite eines Buchsenteils gemäss Fig. 1 mit einer die Buchse direkt verschliessenden Staubschutzvorrichtung gemäss einem bevorzugten Ausführungsbeispiel im geschlossenen Zustand; und
- Fig. 3: die Staubschutzvorrichtung nach Fig. 2 im geöffneten Zustand (ohne einsteckendes Steckerteil).

### WEGE ZUR AUSFÜHRUNG DER ERFINDUNG

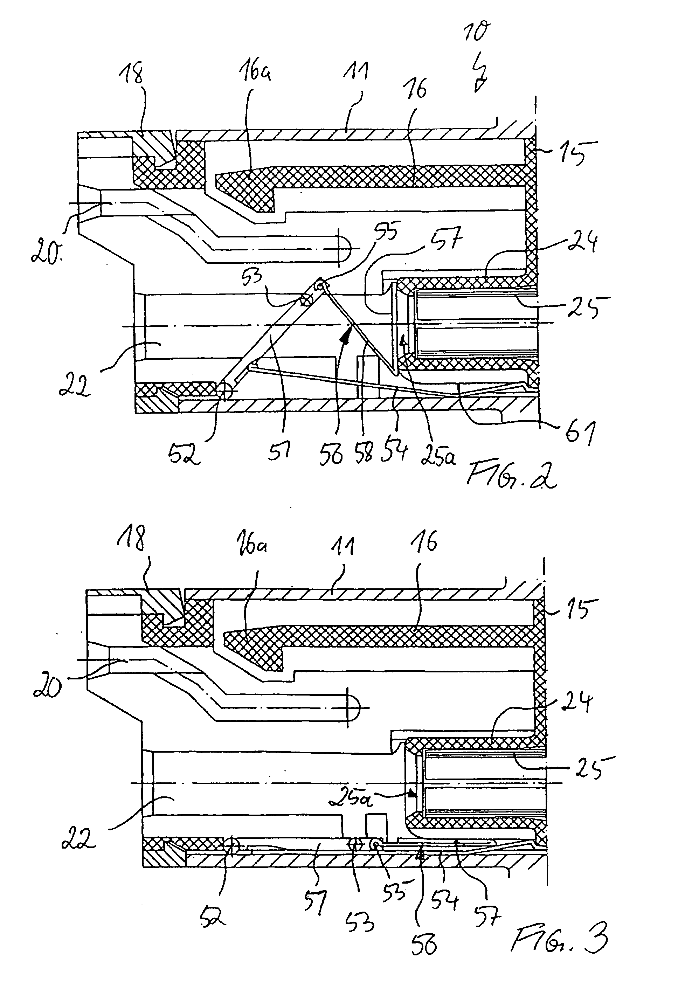

Ein bevorzugtes Ausführungsbeispiel der Erfindung, das in Fig. 2 in der zweiten Schwenkstellung und in Fig. 3 in der ersten Schwenkstellung gezeigt ist, verzichtet erfindungsgemäss auf einen Abschluss des gesamten Buchsenteils 10 und verschliesst nur die eigentliche Buchse 25 staubdicht. Um hierbei einen automatischen Verschwenkungsmechanismus zu realisieren, der beim Einstecken eines Steckerteils die Schutzvorrichtung von der zweiten in die erste Schwenkstellung verschwenkt, wird vorzugsweise auf eine Strahlenschutzklappe 51 gemäss Fig. 1 zurückgegriffen, die mittels Gelenknocken 52 schwenkbar gelagert und durch eine Blattfeder 54 vorgespannt ist. Ein Anschlagsnocken 53, der in der in Fig. 2 gezeigten Stellung der Strahlenschutzklappe 51 an der oberen Kante der Führungsnut 22 anschlägt, begrenzt den Schwenkbereich. An der Strahlenschutzklappe 51 ist mittels weiterer, seitlich herausstehender Gelenknocken 55 ein im Profil V-förmiges Verschlusselement 56 verschwenkbar angelenkt, welches aus einem Befestigungsteil 58 und dem eigentlichen Klappenteil 57 besteht.

Das Befestigungsteil 58 greift mit hakenförmigen Enden um die Gelenknocken 55. Das Klappenteil 57 verschliesst in der zweiten Schwenkstellung (Fig. 2 die Einstecköffnung 25a der Buchse 25. Wird beim Einstecken eines Steckerteils die Strahlenschutzklappe 51 - die bei diesem Ausführungsbeispiel wegen des vorhandenen Klappenteils 57 eigentlich keine Strahlenschutzfunktion mehr hat - gegen die Kraft der Blattfeder 54 nach unten gedrückt, wird das Klappenteil 57 über das Befestigungsteil 58 von der Einstecköffnung 25a weg unter die Buchse 25 in die erste Schwenkstellung (Fig. 3) verschwenkt, wobei Klappenteil 57 und Befestigungsteil 58 zusammengeklappt werden. Zur Führung des Klappenteils 57 ist dabei unterhalb der Buchse 25 eine im vorderen Bereich abgerundete Führungsschulter 61 vorgesehen. Es versteht sich dabei von selbst, dass das Verschlusselement 56 aus einem Material so angefertigt sein muss, dass es beim Uebergang von der zweiten in die erste Schwenkstellung elastisch zusammenklappt. Denkbar ist, dass das Verschlusselement aus einem federnden Metallblech oder aus einem geeigneten Kunststoff besteht. Das Ausführungsbeispiel der Fig. 2 und 3 hat den Vorteil, dass bereits vorhandene Buchsenteile mit Strahlenschutzklappen gemäss Fig. 1 auf sehr einfache Weise umgerüstet und mit einer Staubschutzeinrichtung versehen werden können.

### BEZUGSZEICHENLISTE

- 10: Buchsenteil
- 11: äusseres Buchsengehäuse
- 12,13: Flansch
- 14: Gehäusewand
- 15: inneres Buchsengehäuse (Gehäuseeinschub)
- 16,17: federnde Zunge
- 16a,17a: Sperrklinke
- 16b: Abschrägung
- 18,19: Rahmen (aufschnappbar)
- 20,21: Führungsnut (Steckerdeckel)
- 22,23: Führungsnut (Stecker)
- 24: Buchsenhalterung
- 25: Buchse
- 25a,b: Einstecköffnung (Buchse)
- 26,27,51: Strahlenschutzklappe
- 28,29,52: Gelenknocken
- 30,54: Blattfeder (zweiarmig)
- 55: Gelenknocken
- 53: Anschlagsnocken
- 56: Verschlusselement (V-förmig)
- 57: Klappenteil (Verschlusselement)
- 58: Befestigungsteil (Verschlusselement)
- 61: Führungsschulter

## Patentansprüche

1. Steckverbindung für Lichtwellenleiter, umfassend ein Buchsenteil (10) mit einem auf wenigstens einer Seite offenen äusseren Buchsengehäuse (11), in welches von der wenigstens einen Seite ein Steckerteil mit einem einen Lichtwellenleiter umschliessenden Steckerstift einsteckbar ist, wobei in dem äusseren Buchsengehäuse (11) eine zu der wenigstens einen Seite offene Buchse (25) angeordnet ist, welche beim Einstecken eines Steckerteils durch eine entsprechende Einstecköffnung (25a,b) den zugehörigen Steckerstift aufnimmt, und wobei am Buchsenteil (10) verschwenkbar angeordnete Mittel (31; 39, 41; 47; 57) vorgesehen sind, welche in einer ersten Schwenkstellung ein ungehindertes Einstecken des Steckerteils ermöglichen, und in einer zweiten Schwenkstellung die Buchse (25) gegen die Umgebung des Buchsenteils (10) staubdicht abschliessen, und wobei die Mittel zum staubdichten Abschliessen (39, 41; 47; 57) vollständig innerhalb des Buchsenteils (10) angeordnet sind, **dadurch gekennzeichnet, dass** die Mittel zum staubdichten Abschliessen (56, 57, 58) die Einstecköffnung (25a,b) der Buchse (25) selbst verschliessen.

2. Steckverbindung nach Anspruch 1, **dadurch gekennzeichnet, dass** das Buchsenteil (10) ein in das äussere Buchsengehäuse (11) einschiebbares inneres Buchsengehäuse (15) umfasst, in welchem die Buchse (25) untergebracht ist.

3. Steckverbindung nach Anspruch 1 oder 2, **dadurch gekennzeichnet, dass** die Mittel zum staubdichten Abschliessen ein Klappenteil (57) umfassen, welches in der zweiten Schwenkstellung die Einstecköffnung (25a) der Buchse (25) abdeckt und durch Schwenkmittel (51, 52, 54, 55, 58) entlang einer Führungsschulter (61) in die erste Schwenkstellung verschwenkbar ist, in welcher das Klappenteil (57) seitlich an und parallel zu der Buchse (25) liegt.

4. Steckverbindung nach Anspruch 3, **dadurch gekennzeichnet, dass** innerhalb des Buchsenteils (10) eine beim Einstecken eines Steckerteils federnd versenkbare Strahlenschutzklappe (51) angeordnet ist, dass als Schwenkmittel für die Verschwenkung des Klappenteils (57) die Strahlenschutzklappe (51) verwendet wird, und dass das Klappenteil (57) über ein Befestigungsteil (58) an der Strahlenschutzklappe (51) verschwenkbar angelenkt ist.

5. Steckverbindung nach einem der Ansprüche 1 bis 4, **dadurch gekennzeichnet, dass** das Buchsenteil (10) zum entgegengesetzten Einstecken zweier Steckerteile auf gegenüberliegenden Seiten ausgebildet ist, und dass die verschwenkbar angeordnete Mittel (31; 39, 41; 47; 57) auf beiden Seiten des Buchsenteils (10) vorgesehen sind.

## Claims

1. A plug connector for optical waveguides, comprising a bushing part (10) having an outer bushing housing (11) which is open on at least one side and into which a plug part having a plug pin enclosing a optical waveguide can be inserted from the at least one side, whereby a bushing (25) which is open toward at least one side is arranged in the outer bushing housing (11) and receives the respective plug pin when a plug part is inserted through a corresponding plug-in opening (25a,b), and whereby means (31; 39, 41; 47; 57) arranged pivotably on the bushing part (10) are provided, permitting unhindered insertion of the plug part in a first pivot position, and sealing the bushing (25) with respect to the environment of the bushing part (10) in a dust-proof manner in a second pivot position, and whereby the means for dust-proof sealing (39, 41; 47, 57) are arranged completely inside the bushing part (10), **characterized in that** the means for dust-proof sealing (56, 57, 58) seal the plug-in opening (25a,b) of the bushing (25) itself.

2. The plug connector according to Claim 1, **characterized in that** the bushing part (10) comprises an inner bushing housing (15) in which the bushing (25) is accommodated and which can be inserted into the outer bushing housing (11).

3. The plug connector according to Claim 1 or 2, **characterized in that** the means for dust-proof sealing comprise a valve part (57) which covers the plug-in opening (25a) of the bushing (25) in the second pivot position and can be pivoted by pivot means (51, 52, 54, 55, 58) along a guide shoulder (61) into the first pivot position in which the valve part (57) is in lateral contact with and parallel to the bushing (25).

4. The plug connector according to Claim 3, **characterized in that** a beam safety valve (51) which can be countersunk in insertion of a plug part is arranged inside the bushing part (10), the beam safety valve (51) is used as the pivot means for pivoting the valve part (57) and the valve part (57) is connected by an articulated joint to the beam safety valve (51) by means of a fastening part (58) so that the valve part can be pivoted.

5. The plug connector according to one of Claims 1 through 4, **characterized in that** the bushing part (10) is designed for opposing insertion of two plug parts on opposite sides, and the pivotably arranged means (31; 39, 41; 47; 57) are provided on both sides of the bushing part (10).

## Revendications

1. Raccordement pour fibre optique, comportant une partie douille (10) avec un boîtier de douille (11) extérieur ouvert au moins sur un côté, dans lequel peut être branchée d'au moins un côté une prise avec une fiche enserrant une fibre optique, une douille ouverte (25) au moins d'un côté étant prévue dans le boîtier extérieur de douille (11), cette douille recevant, lors du branchement d'une prise, la fiche afférente grâce à un orifice de branchement adéquat (25a,b), et des moyens orientables (31 ; 39, 41 ; 47 ; 57) étant prévus sur la partie douille (10) pour permettre, dans une première position de basculement, un branchement sans entraves de la prise et, dans une deuxième position de basculement, de protéger la douille (25) de manière étanche contre les poussières de l'environnement de la partie douille (10) et les moyens de fermeture étanche (39, 41 ; 47 ; 57) étant placés intégralement à l'intérieur de la partie douille (10), **caractérisé en ce que** les moyens de fermeture étanche (56, 57, 58) ferment eux-mêmes l'orifice de branchement (25a,b) de la douille (25).

2. Raccordement selon la revendication 1, **caractérisé en ce que** la partie douille (10) comporte un boîtier de douille interne (15) pouvant être inséré dans le boîtier de douille extérieur (11) et dans lequel la douille (25) est installée.

3. Raccordement selon la revendication 1 ou 2, **caractérisé en ce que** les moyens de fermeture étanche comportent un clapet (57), qui, dans la deuxième position de basculement, recouvre l'orifice de branchement (25a) de la douille (25) et peut basculer, grâce à des moyens de basculement (51, 52, 54, 55, 58) le long d'un épaulement de guidage (61), jusqu'à la première position de basculement, dans laquelle le clapet (57) se trouve en position latérale et parallèle à la douille (25).

4. Raccordement selon la revendication 3, **caractérisé en ce qu'**à l'intérieur de la partie douille (10), une trappe de protection contre les radiations (51) qui peut s'abaisser souplement lors du branchement d'une prise est prévue, que la trappe de protection contre les radiations (51) est utilisée comme moyen de basculement pour faire basculer le clapet (57) et que le clapet (57) est fixé en articulation par une pièce de fixation (58) sur la trappe de protection contre les radiations (51).

5. Raccordement selon une des revendications 1 à 4, **caractérisé en ce que** la partie douille (10) est conçue pour un branchement opposé de deux prises sur des côtés opposés et que les moyens orientables (31 ; 39, 41 ; 47 ; 57) sont placés des deux côtés sur la partie douille (10)
